# EUROPÄISCHE PATENTANMELDUNG

(11) **EP 3 907 028 A1**
(43) Veröffentlichungstag der Anmeldung: **10.11.2021**
(21) Anmeldenummer: 21167629.1
(22) Anmeldetag: 09.04.2021
(51) Int. Cl.: B23B 31/16, B23B 31/20, B23B 31/10

(54) **SPANNFUTTER**

(30) Priorität: 21.04.2020 DE 102020110824
(71) Anmelder: Wilhelm Blessing GmbH & Co. KG, 73760 Ostfildern (DE)
(72) Erfinder: THARLET, Sebastian, 72800 Ehningen (DE)
(74) Vertreter: Raible Deissler Lehmann Patentanwälte PartG mbB

(57) **Zusammenfassung**

Spannfutter für eine Werkzeugmaschine zur Bearbeitung von Werkstücken mit einem Futterkörper (12), der eine erste Einrichtung zur Aufnahme einer Zangenbuchse aufweist, wobei in dem Futterkörper ein Kolben (14) vorgesehen ist, der dazu eingerichtet ist, eine Hubbwegung auszuführen, um wiederum eine Zuführbewegung eines Spannmittels zu bewirken, wobei der Kolben (14) über eine zweite Einrichtung für eine Verbindung mit der Zangenbuchse verfügt, wobei die Verbindung derart ist, dass eine Begrenzung einer Relativbewegung zwischen dem Kolben (14) und der Zangenbuchse gegeben ist, um eine Hubbewegung des Kolbens (14) zu begrenzen.

## Beschreibung

Die Erfindung betrifft ein Spannfutter für eine Werkzeugmaschine zur Bearbeitung von Werkstücken sowie einen Kolben, eine Zangenbuchse und einen Futterkörper für ein solches Spannfutter.

Als Spannfutter wird eine Vorrichtung bezeichnet, die in Werkzeugen, insbesondere auch in Werkzeugmaschinen, ein Einsatzwerkzeug, wie bspw. einen Bohrer oder einen Fräser, oder das zu bearbeitende Werkstück aufnimmt bzw. einspannt. Im Folgenden wird insbesondere auf das Aufnehmen eines Werkstücks eingegangen, ohne dass dies eine Einschränkung des vorgestellten Spannfutters darstellen soll.

Spannfutter werden bspw. in Drehmaschinen zur Bearbeitung von runden sowie unrunden bzw. exzentrischen Werkstücken eingesetzt. Hierbei ist es in manchen Fällen auch erforderlich, das Werkstück von außen und innen in zwei oder mehreren Aufspannungen zu bearbeiten. Als Mitnahme kann ein Spannelement bzw. ein Spannmittel, wie bspw. Spannbacken und Spannzangen, dienen, mit denen das Werkstück sicher eingespannt wird.

Das Spannmittel ermöglicht dabei eine Lagefixierung des Werkstücks sowie eine Aufnahme einer Schnittkraft bzw. eines Drehmoments, so dass das durch die Bearbeitung auf das Werkstück übertragene Drehmoment, bspw. das durch den Schnitt des Werkzeugs bewirkte Drehmoment, abgeleitet werden kann. Das Spannmittel erfüllt somit eine Zentrierfunktion und gewährleistet die Drehmomentmitnahme bzw. Drehmomentübertragung.

In Abhängigkeit von dem verwendeten Spannmittel unterscheidet man zwischen unterschiedlichen Spannfuttern. So sind bspw. Backenfutter bekannt, die als Spannmittel Spannbacken verwenden. Ein Zangenfutter hingegen verwendet als Spannmittel eine Spannzange.

Spannbacken üben eine Drehpunktspannung auf das Werkstück aus. Mit diesen Spannbacken kann eine große Zuführbewegung, bewirkt durch eine Hubbewegung eines Kolbens, ausgeführt werden, so dass diese auch für Werkstücke mit größeren Maßschwankungen, bspw. Rohteile, geeignet sind. Eine Spannzange hingegen, die üblicherweise eine außen kegelförmige, radial geschlitzte Hülse mit einer runden, ggf auch quadratischen oder sechseckigen Bohrung definierter Größe umfasst, umschließt das Werkstück vollständig, so dass ein präziseres Einspannen möglich ist. Allerdings können im Vergleich zu Spannbacken nur Werkstücke mit kleineren Maßabweichungen, bspw. Halb-Fertigteile, eingespannt werden.

Die Druckschrift DE 10 2014 218 039 B3 beschreibt eine Spannvorrichtung zum Einspannen eines Werkstücks mit einem Spannfutter. In dem Spannfutter ist eine Spannzange mit mehreren ringförmig angeordneten Spannsegmenten gelagert. Die Spannvorrichtung umfasst weiterhin eine Zugstange und eine Zughülse zur axialen Kraftübertragung von der Zugstange auf die Spannzange mit einem Zugsteg.

Aus der Druckschrift DE 100 2016 117 375 A1 ist ein Adapter für ein Drehfutter einer Werkzeugmaschine bekannt. An dem Drehfutter sind mehrere radial verschiebbar gelagerte Drehfutterbacken angeordnet, zwischen denen der Adapter lösbar eingespannt werden kann.

Die Druckschrift DE 10 2004 044 848 A1 beschreibt eine Wechselvorrichtung für Spannköpfe mit mehreren Spannbacken. Dabei sind die Spannbacken der Spannköpfe durch radial verlaufende Schlitze voneinander getrennt und miteinander elastisch verbunden.

Aus der Druckschrift DE 10 2009 030 386 B4 ist ein Schnellwechselsystem für einen Werkzeugträger bekannt. Bei diesem sind eine Spannzange gegen einen Adapter und umgekehrt in einer Aufnahme einer Spindel tauschbar gehalten, wobei der Adapter mit einer Adapter-Spanneinrichtung als Teil einer Festlegeeinrichtung an einer Spindel festlegbar ist.

Die Umrüstung des Spannfutters von einem Betrieb mit Backenfutter auf einen Betrieb mit Zangenfutter und umgekehrt erweist sich als umständlich und problematisch und ist daher zeitaufwändig. Weiterhin ist die Umrüstung ggf. mit einer Gefährdung der damit betrauten Person verbunden. Es wird daher angestrebt, ein Spannfutter zu schaffen, bei dem die genannte Umrüstung schnell und problemlos von statten gehen kann.

Vor diesem Hintergrund werden ein Spannfutter nach Anspruch 1, ein Kolben gemäß Anspruch 7, eine Zangenbuchse nach Anspruch 10 sowie ein Futterkörper mit den Merkmalen des Anspruchs 12 vorgestellt. Ausführungsformen ergeben sich aus den abhängigen Ansprüchen und aus der Beschreibung.

Das beschriebene Spannfutter dient für einen Einsatz in einer Werkzeugmaschine und in dieser zur Bearbeitung von Werkstücken. Das Spannfutter weist einen Futterkörper auf, der eine erste Einrichtung zur Aufnahme einer Zangenbuchse aufweist. Die erste Einrichtung ermöglicht somit eine Verbindung mit einer Zangenbuchse, insbesondere einer Zangen-Bajonettbuchse für einen Betrieb mit Zangenfutter. Für einen Betrieb mit Backenfutter kann diese erste Einrichtung auch eine Backenbuchse, insbesondere eine Backen-Bajonettbuchse aufnehmen, d. h. eine Verbindung zu dieser Backenbuchse ermöglichen.

In dem Futterkörper ist ein Kolben vorgesehen, der dazu eingerichtet ist, eine Hubbwegung auszuführen. Diese Hubbwegung bedeutet eine Hin- und Herbewegung des Kolbens im Wesentlichen in axialer Richtung, d. h. in Richtung der Längsachse des Spannfutters. Diese Hubbwegung bewirkt wiederum, bspw. über eine Schräge eine Zuführbewegung eines Spannmittels, so dass ein Werkstück pder ein Werkzeug eingespannt und wieder gelöst werden kann.

Der Kolben verfügt über eine zweite Einrichtung für eine Verbindung mit der Zangenbuchse, wobei die Verbindung derart ist, dass eine Begrenzung einer Relativbewegung zwischen dem Kolben und der Zangenbuchse gegeben ist, um eine Hubbewegung des Kolbens zu begrenzen. Dies bedeutet, dass die Verbindung zwischen der Zangenbuchse, bspw. einer Zangen-Bajonettbuchse und dem Kolben derart ist, dass diese Relativbewegung, die die Hubbewegung des Kolbens darstellt, bspw. durch einen Anschlag, begrenzt ist.

Für den Betrieb mit Backenfutter ist mindestens ein Grundbacken vorgesehen, der typischerweise auch im Spannfutter verbleibt, auch wenn diese für einen Betrieb mit Zangenfutter umgerüstet ist. Auf den mindestens einen Grundbacken ist jeweils ein Aufsatzbacken aufgesetzt, wobei der mindestens eine Grundbacken und der mindestens eine Aufsatzbacken mindestens einen Spannbacken bilden, der als Spannmittel dient. Somit bewirkt eine Hubbewegung des Kolbens eine Zuführbewegung des mindestens einen Spannbackens.

Typischerweise ist im Betrieb mit Backenfutter eine Backenbuchse auf das Spannfutter aufgesetzt. Diese ist bspw. in der ersten Einrichtung des Futterkörpers, bspw. mindestens eine Aussparung, aufgenommen. Zusätzlich kann dann auf die Backenbuchse eine Blindbuchse aufgesetzt sein, die einen Schutz vor Verschmutzung darstellt.

Im Betrieb mit einem Zangenfutter ist eine Zangenbuchse vorgesehen, die mit dem Kolben derart verbunden ist, dass eine Hubbegrenzung des Kolbens gegeben ist. Dabei ist eine Spannzange als Spannmittel in den Kolben eingesetzt, so dass eine Hubbewegung des Kolbens eine Zuführbewegung der Spannzange bewirkt. Diese Hubbewegung und damit die Zuführbewegung der Spannzange sind begrenzt. Hierzu verfügt der Kolben bspw. über eine zweite Einrichtung und die Zangenbuchse über eine dritte Einrichtung, die so zusammenwirken, dass eine Verbindung zwischen den beiden Komponenten gegeben ist, die eine begrenzte Relativbewegung zwischen den beiden Komponenten ermöglicht.

Bei dem Spannfutter ist in Ausgestaltung die zweite Einrichtung des Kolbens dazu eingerichtet ist, einen Bajonettverschluss zu bewirken. Diese zweite Einrichtung wirkt dann typischerweise mit einer dritten Einrichtung der Zangen- oder Backenbuchse, die dann als Bajonettbuchse ausgebildet ist, zusammen, so dass eine Verbindung bewirkt wird, die eine begrenzte Relativbewegung zulässt.

Es wird ebenfalls ein Kolben für ein Spannfutter der hierin beschriebenen Art vorgestellt,, wobei der Kolben über eine zweite Einrichtung verfügt, die dazu eingerichtet ist, eine Verbindung mit einer Zangenbuchse, bspw. einer Zangen-Bajonettbuchse, bereitzustellen, wobei die Verbindung derart ist, dass eine Begrenzung einer Relativbewegung zwischen dem Kolben und der Zangenbuchse gegeben ist, um eine Hubbewegung des Kolbens zu begrenzen.

Die zweite Einrichtung umfasst somit in Ausgestaltung ein erstes Element eines Bajonettverschlusses und ggf. einen Anschlag für den Kolben. Dieser Anschlag kann auch durch die dritte Einrichtung der Zangenbuchse gegeben sein.

Daneben wird eine Zangenbuchse für ein Spannfutter der hierin beschriebenen Art vorgestellt. Diese Zangenbuchse, die bspw. als Zangen-Bajonettbuchse ausgebildet ist, verfügt über eine dritte Einrichtung, die dazu eingerichtet ist, eine Verbindung mit einem Kolben, insbesondere einem Kolben der hierin beschriebenen Art, bereitzustellen, wobei die Verbindung derart ist, dass eine Begrenzung einer Relativbewegung zwischen dem Kolben und der Zangenbuchse gegeben ist, um eine Hubbewegung des Kolbens zu begrenzen.

In Ausgestaltung umfasst die dritte Einrichtung ein zweites Element eines Bajonettverschlusses. Diese dritte Einrichtung wirkt somit mit der zweiten Einrichtung des Kolbens zusammen. Dieser Bajonettverschluss verbindet den Kolben mit der Bajonett-Zangenbuchse und zwar so, dass eine begrenzte Relativbewegung ermöglicht ist.

Es wird zudem ein Futterkörper für ein Spannfutter, wie dieses hierin beschrieben ist, vorgestellt. Dieser Futterkörper, der Komponenten des Spannfutters aufnimmt, weist eine erste Einrichtung zur Aufnahme einer Zangenbuchse, insbesondere einer Zangen-Bajonettbuchse, auf.

Ein Bajonettverschluss ist eine schnell herstellbare und lösbare mechanische Verbindung zweier insbesondere zylindrischer Teile in ihrer Längsachse. Die Teile werden durch Ineinanderstecken und entgegengesetztes Drehen verbunden und so auch wieder getrennt.

Das vorgestellte Spannfutter ermöglicht nunmehr einen schnellen Wechsel von einem Betrieb mit Backenfutter zu einem Betrieb mit Zangenfutter und umgekehrt durch Umrüsten des verwendeten Spannmittels. Bei einem Betrieb mit Backenfutter werden als Spannmittel Spannbacken, die Grundbacken mit auf diesen aufgesetzten Aufsatzbacken umfassen, zum Einspannen des Werkstücks oder Werkzeugs verwendet. Eine Zuführbewegung der Spannbacken wird durch eine Hubbewegung eines Kolbens bewirkt.

Bei einem Betrieb mit Zangenfutter wird als Spannmittel eine Spannzange verwendet, die über eine Zangenbuchse, bspw. eine Zangen-Bajonettbuchse, eingesetzt ist. Diese Zangen-Bajonettbuchse wiederum ist in einen Anschlag des Kolbens eingehängt. Eine Hubbewegung des Kolbens bewirkt eine Zuführbewegung der Spannzange. Der Anschlag bewirkt dabei eine Begrenzung der Hubbewegung des Kolbens und damit eine Begrenzung der Zuführbewegung der Spannzange. Zu beachten ist, dass die genannten Grundbacken, die in diesem Betrieb typischerweise im Spannfutter verbleiben, hierbei ebenfalls eine geringe, nicht störende Zuführbewegung ausführen.

Das vorgestellte Spannfutter ist nunmehr so eingerichtet, dass dieses sowohl für einen Betrieb mit Backenfutter als auch für einen Betrieb mit Zangenfutter eingerichtet ist, wobei ein Wechsel des Betriebs eine Umrüstung des Spannmittels, die schnell und problemlos ausgeführt werden kann, erfordert.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnung

Figur 1 zeigt eine Ausführung des vorgestellten Spannfutters für einen Betrieb mit Spannbacken.
Figur 2 zeigt eine Ausführung des vorgestellten Spannfutters für einen Betrieb mit Spannzange.
Figur 3 zeigt eine Ausführung eines Kolbens in einer perspektivischen Ansicht.
Figur 4 zeigt den Kolben aus Figur 3 in einer Schnittansicht.
Figur 5 zeigt eine Zangen-Bajonettbuchse für eine Spannzange für den Betrieb mit Zangenfutter in einer perspektivischen Gesamtansicht.
Figur 6 zeigt die Zangen-Bajonettbuchse aus Figur 5 in einer Schnittansicht.
Figur 7 zeigt eine Backen-Bajonettbuchse für den Betrieb mit Backenfutter in einer perspektivischen Ansicht.
Figur 8 zeigt eine Ausführung eines Futterkörpers in einer perspektivischen Ansicht.
Figur 9 zeigt eine Ausführung eines Grundbackens in einer perspektivischen Ansicht.

### Ausführungsformen der Erfindung

Die Erfindung ist anhand von Ausführungsformen in der Zeichnung schematisch dargestellt und wird im Folgenden unter Bezugnahme auf die Zeichnung ausführlich beschrieben.

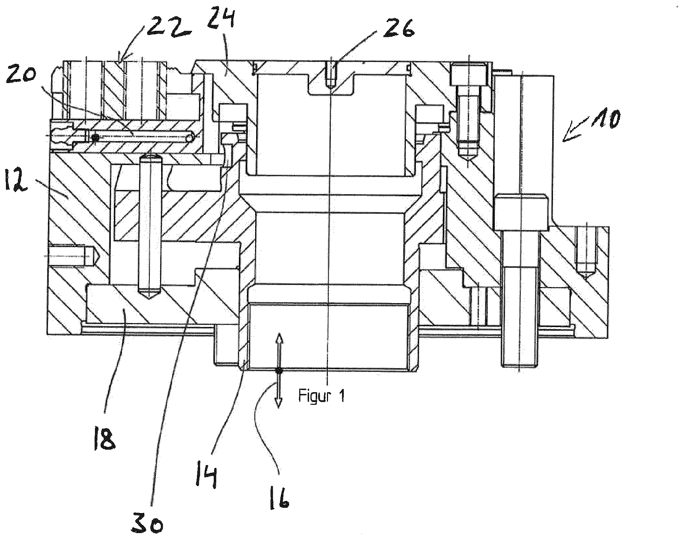

In Figur 1 ist eine Ausführung des vorgestellten Spannfutters dargestellt, die insgesamt mit der Bezugsziffer 10 bezeichnet ist. Dieses ist für einen Betrieb mit Backenfutter eingerichtet. Die Darstellung zeigt einen Futterkörper 12, in dem ein Kolben 14 geführt ist, der dazu eingerichtet ist, eine Hubbewegung in Richtung eines Doppelpfeils 16 auszuführen. Die Darstellung zeigt weiterhin einen Deckel 18, einen Grundbacken 20, auf den ein Aufsatzbacken für einen Backenbetrieb (Bezugsziffer 22) aufzusetzen ist, eine Backen-Bajonettbuchse 24, einen Stopfen 26, der als Schutz vor Verschmutzung dient. Insbesondere ist im Kolben 14 eine Ausnehmung 30 zu erkennen, die zur Aufnahme einer Zangen-Bajonettbuchse für den Betrieb mit Zangenfutter dient und gleichzeitig eine Begrenzung der Hubbewegung des Kolbens 14 bewirkt.

Eine Hubbewegung des Kolbens 14 bewirkt eine Zuführbewegung des Grundbackens 20.

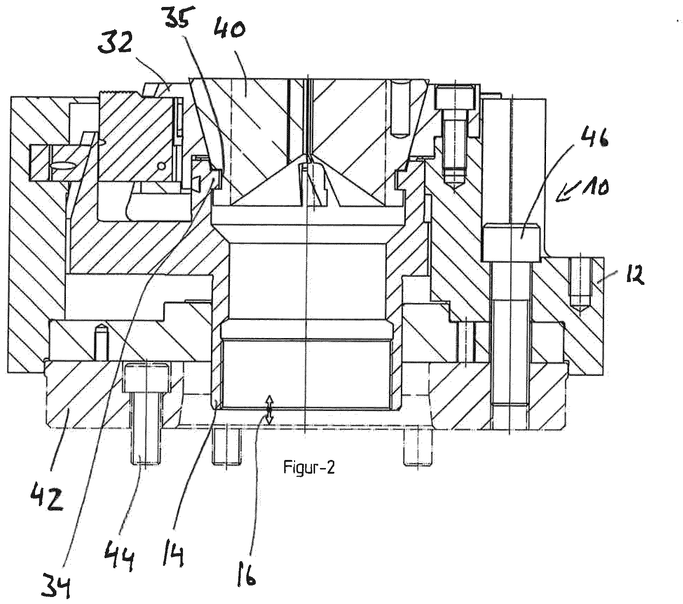

Figur 2 zeigt das Spannfutter 10 aus Figur 1, das für einen Betrieb mit Spannzange umgerüstet ist. Die Darstellung zeigt den Futterkörper 12 und den Kolben 14, dessen Hubbewegung mit dem Doppelpfeil 16 verdeutlicht ist. Die Darstellung zeigt weiterhin eine Zangen-Bajonettbuchse 32, einer Spannzange 40 als Führung dient. Ein umlaufender Steg 34 des Kolbens 14 greift in eine umlaufende Nut 35 einer Spannzange 40 ein.

Die Darstellung zeigt die Spannzange 40, die in den Kolben 14 eingesetzt ist. Die Ausnehmung 30 (hier nicht dargestellt) in dem Kolben 14 dient zur Begrenzung des Hubs des Kolbens 14 und damit zur Begrenzung der Zuführbewegung der Spannzange 40. Die Spannzange 40 wird typischerweise mit einem nach innen spreizenden Sonderwerkzeug in die Einhängung des Kolbens 14 eingesetzt.

Die Darstellung zeigt außerdem einen Zwischenflansch 42, eine erste zylindrische Schraube 44 und eine zweite zylindrische Schraube 46.

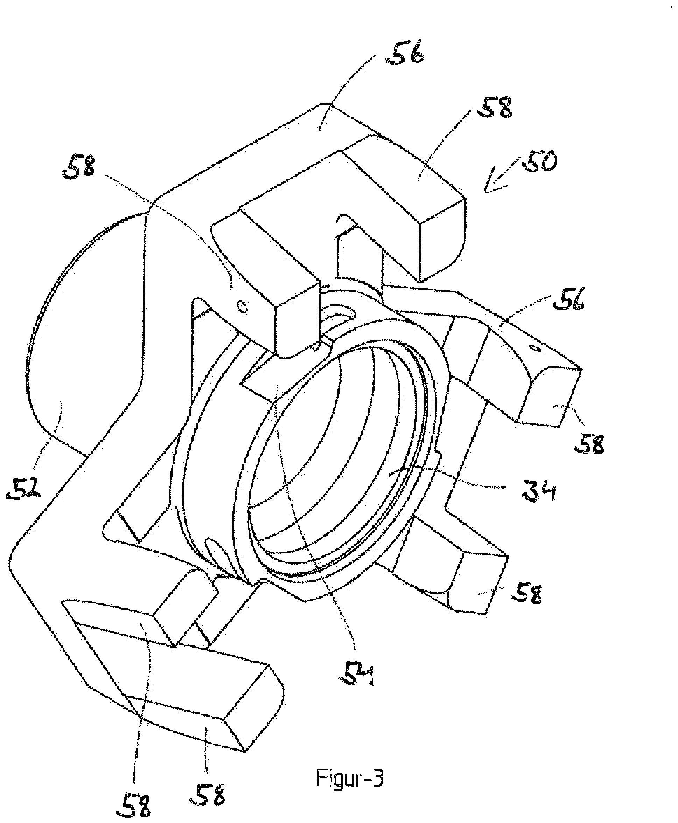

Figur 3 zeigt eine Ausführung eines Kolbens in einer perspektivischen Ansicht. Dieser Kolben ist insgesamt mit Bezugsziffer 50 bezeichnet. Die Darstellung zeigt einen zylindrischen Grundkörper 52, der an einem Ende über den Umfang verteilt Bajonett-Einhängungen 54 für die Zangen-Bajonettbuchse, hier nicht dargestellt, aufweist. In diesem Fall sind drei über den Umfang verteilte Einhängungen 54 gegeben. Es ist aber auch eine andere Anzahl von Einhängungen 54 denkbar. Von Bedeutung ist, dass diese Einhängungen 54 mit Gegenelementen an der Zangen-Bajonettbuchse derart zusammenwirken, dass eine Hubbegrenzung des Kolbens 50 bewirkt wird. Die Einhängungen 54 wirken somit auch als Anschlag. für die Bewegung des Kolbens 50. Die Bajonett-Einhängung 54 entspricht der Ausnehmung 30 aus Figur 1. Weiterhin ist auch der umlaufende Steg 34 aus Figur 2 gezeigt.

Grundsätzlich ist auch eine andere Art der Verbindung zwischen dem Kolben 50 und einer Zangenbuchse denkbar. Von Bedeutung ist lediglich, dass bspw. durch einen Anschlag eine Hubbegrenzung des Kolbens bewirkt wird. In diesem Fall stellt die Einhängung durch ihre Ausgestaltung auch den Anschlag bereit. Zu berücksichtigen ist aber lediglich, dass die Verbindung zwischen dem Kolben 50 und einer Zangenbuchse, bspw. einer Zangen-Bajonettbuchse, derart ist, dass die Hubbewegung des Kolbens 50 begrenzt wird und somit auch die Zuführbewegung der Spannzange begrenzt wird, da diese wesentlich geringer als die Zuführbewegung der Spannbacken ist.

An dem Grundkörper 52 sind drei sich radial erstreckende Ausleger 56 angeformt, die wiederum in gleichem Winkelabstand voneinander beabstandet sind. Die Ausleger 56 tragen wiederum jeweils zwei parallel zueinander gerichtete, sich in axialer Richtung erstreckende Keile 58, die als Betätigung bzw. Antrieb, insbesondere als Betätigung bzw. Antrieb der Spannbacken, dienen.

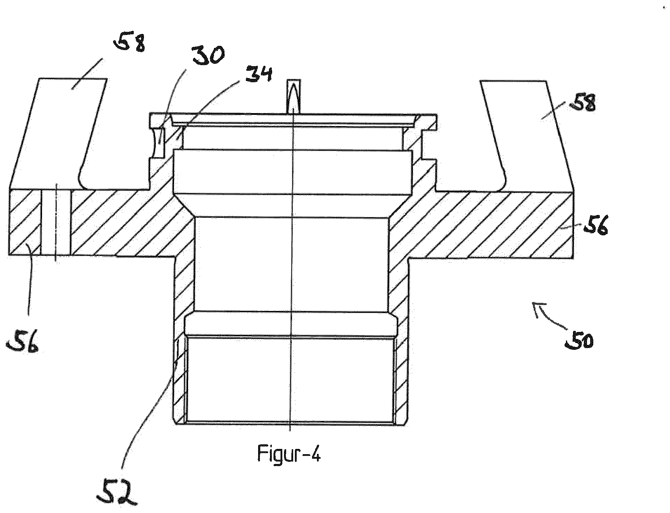

Figur 4 zeigt den Kolben 50 aus Figur 3 in einer Schnittansicht. Zu erkennen sind der Grundkörper 52, Ausleger 56 und Keile 58. Weiterhin verdeutlicht die Darstellung im Schnitt die Einhängungen 54, die Ausnehmungen darstellen und somit bei eingehängter Zangen-Bajonettbuchse eine Hubbegrenzung des Kolbens 50 bewirken und somit eine Art Anschlag für diesen Kolben 50 darstellen.

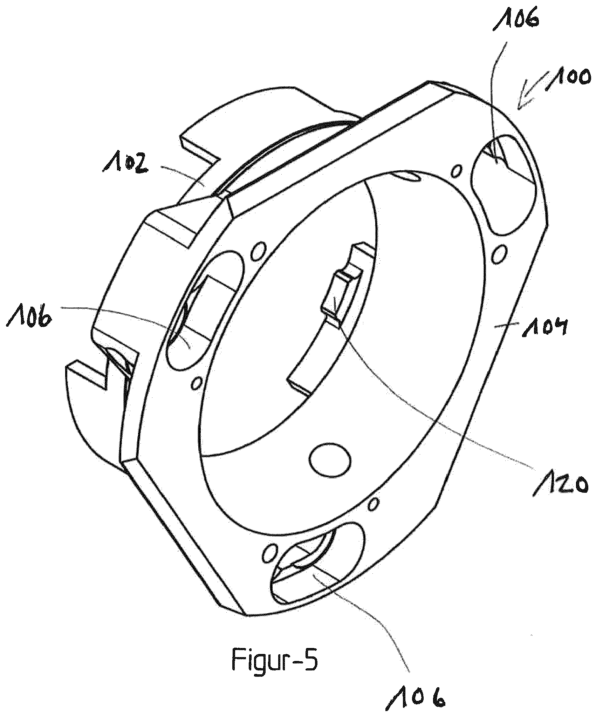

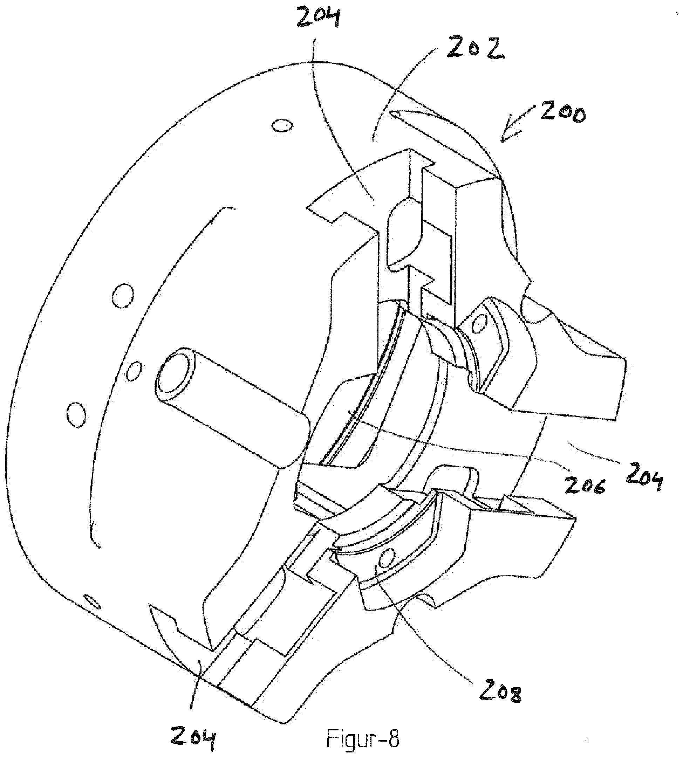

Figur 5 zeigt eine Zangen-Bajonettbuchse für eine Spannzange für den Betrieb mit Zangenfutter in einer perspektivischen Gesamtansicht. Diese Zangenbajonettbuchse ist insgesamt mit Bezugsziffer 100 bezeichnet. Die Darstellung zeigt einen Grundkörper 102, an dem ein Kragen 104 angeformt ist, in dem wiederum drei Öffnungen 106 vorgesehen sind, die dazu eingerichtet sind, mit Aussparungen bzw. Ausfräsungen 208 im Futterkörper 200 in Figur 8 so zusammenwirken, dass ein Bajonettverschluss realisiert werden kann.

Weiterhin sichtbar sind die Bajonett-Einhängungen 120, die im Zusammenwirken mit den Einhängungen 54 auch als Anschlag dienen. Dieser Bajonettverschluss bewirkt eine begrenzte Relativbewegung zwischen dem Kolben 50 und der Zangen-Bajonettbuchse 100 und damit eine Hubbegrenzung des Kolbens. Auf diese Weise wird auch die Zuführbewegung der Spannzange begrenzt. Ist somit das vorgestellte Spannfutter für einen Betreib mit Zangenfutter umgerüstet, d. h. in den Kolben ist die Zangen-Bajonettbuchse 100 eingehängt und die Spannzange eingesetzt, so ist sichergestellt, dass die Spannzange nur eine für deren Betreib ausreichende Zuführbewegung ausführen kann und somit auch die Spannzange nicht beschädigt wird.

In einer Ausführung des vorgestellten Spannfutters beträgt der Kolbenhub im Betrieb mit Backenfutter bspw. 23 mm und im Betrieb mit Zangenfutter lediglich 4 mm.

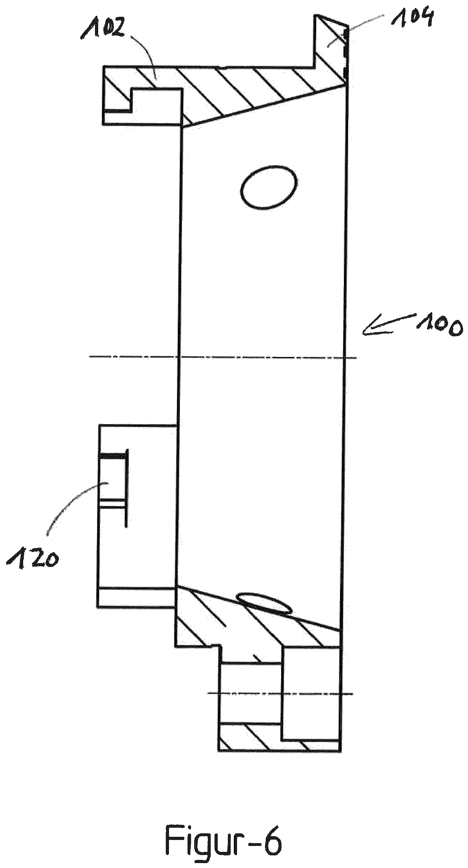

Figur 6 zeigt die Zangen-Bajonettbuchse 100 aus Figur 3 in einer Schnittansicht.

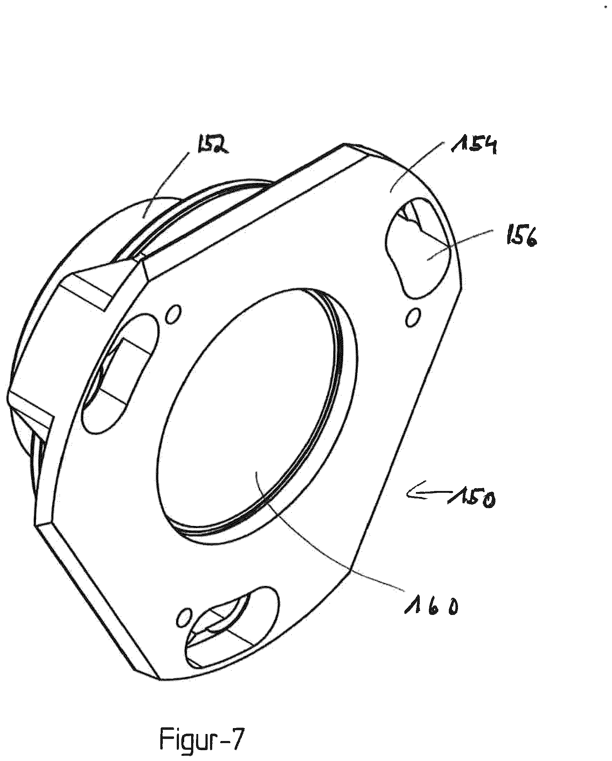

Figur 7 zeigt eine Backen-Bajonettbuchse für den Betrieb mit Backenfutter, welche insgesamt mit Bezugsziffer 150 bezeichnet ist. Die Darstellung zeigt einen Grundkörper 152 mit Kragen 154, in dem Bajonett-Öffnungen 156 für die Montage im Futterkörper 200 (Figur 8) vorgesehen sind. Zu beachten ist, dass in eine zentrale Öffnung 160 der Backen-Bajonettbuchse 150 eine Blindbuchse eingesetzt werden kann, um diese Öffnung zu verschließen. Auf diese Weise ist sichergestellt, dass keine Verunreinigungen in das Spannfutter gelangen.

Figur 8 zeigt eine Ausführung eines Futterkörpers 200 in einer perspektivischen Ansicht. Dieser Futterkörper weist einen im Wesentlichen zylindrischen Grundkörper 202 auf, in den die Komponenten des Spannfutters, wie bspw. der Kolben, einzusetzen sind. Über den Umfang des Futterkörpers 200 sind drei Ausnehmung 204 verteilt, in denen Spannbacken aufgenommen sein können. Eine Spannzange ist in eine Öffnung 206 des Futterköpers 200 einzusetzen.

Weiterhin sind zwischen den Ausnehmungen 206 Aussparungen 208 vorgesehen, die dazu dienen, eine der Bajonettbuchsen 100 oder 150 im Bajonettverschluss aufzunehmen.

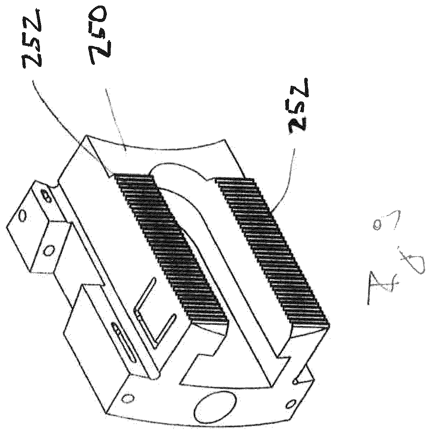

Figur 9 zeigt eine Ausführung eines Grundbackens, der insgesamt mit der Bezugsziffer 250 versehen ist. Dieser Grundbacken 250 trägt eine Verzahnung 252, die dazu dient, eine Verbindung mit einem Aufsatzbacken, insbesondere über eine entsprechende Verzahnung dieses Aufsatzbackens, bereitzustellen. Andere Schnittstellen zum Aufsatzbacken sind ebenfalls denkbar.

## Patentansprüche

1. Spannfutter für eine Werkzeugmaschine zur Bearbeitung von Werkstücken mit einem Futterkörper (12, 200), der eine erste Einrichtung zur Aufnahme einer Zangenbuchse aufweist, wobei in dem Futterkörper (12, 200) ein Kolben (14, 50) vorgesehen ist, der dazu eingerichtet ist, eine Hubbwegung auszuführen, um wiederum eine Zuführbewegung eines Spannmittels zu bewirken, wobei der Kolben (14, 50) über eine zweite Einrichtung für eine Verbindung mit der Zangenbuchse verfügt, wobei die Verbindung derart ist, dass eine Begrenzung einer Relativbewegung zwischen dem Kolben (14, 50) und der Zangenbuchse gegeben ist, um eine Hubbewegung des Kolbens (14, 50) zu begrenzen.

2. Spannfutter nach Anspruch 1, bei dem mindestens ein Grundbacken (20) vorgesehen ist, auf dem ein Aufsatzbacken aufgesetzt ist, wobei der mindestens eine Grundbacken (20) und der mindestens eine Aufsatzbacken mindestens einen Spannbacken bilden, der als Spannmittel dient, so dass eine Hubbewegung des Kolbens(14, 50) eine Zuführbewegung des mindestens einen Spannbackens bewirkt.

3. Spannfutter nach Anspruch 2, bei dem eine Backenbuchse auf das Spannfutter (10) aufgesetzt ist.

4. Spannfutter nach Anspruch 3, bei dem auf die Backenbuchse eine Blindbuchse aufgesetzt ist.

5. Spannfutter nach Anspruch 1, bei dem eine Zangenbuchse vorgesehen ist, die mit dem Kolben (14, 50) derart verbunden ist, dass eine Hubbegrenzung des Kolbens (14, 50) gegeben ist, und bei dem eine Spannzange (40) als Spannmittel in den Kolben (14, 50) eingesetzt ist, so dass eine Hubbewegung des Kolbens (14, 50) eine Zuführbewegung der Spannzange (40) bewirkt.

6. Spannfutter nach einem der Ansprüche 1 bis 5, bei dem die zweite Einrichtung des Kolbens (14, 50) dazu eingerichtet ist, einen Bajonettverschluss zu bewirken.

7. Kolben für ein Spannfutter (10) nach einem der Ansprüche 1 bis 6, wobei der Kolben (14, 50) über eine zweite Einrichtung verfügt, die dazu eingerichtet ist, eine Verbindung mit einer Zangenbuchse, insbesondere einer Zangenbuchse nach Anspruch 10 oder 11, bereitzustellen, wobei die Verbindung derart ist, dass eine Begrenzung einer Relativbewegung zwischen dem Kolben (14, 50) und der Zangenbuchse gegeben ist, um eine Hubbewegung des Kolbens (14, 50) zu begrenzen.

8. Kolben nach Anspruch 7, bei dem die zweite Einrichtung ein erstes Element eines Bajonettverschlusses umfasst.

9. Kolben nach Anspruch 7 oder 8, bei dem die zweite Einrichtung einen Anschlag für den Kolben (14, 50) umfasst.

10. Zangenbuchse für ein Spannfutter nach einem der Ansprüche 1 bis 6, die über eine dritte Einrichtung verfügt, die dazu eingerichtet ist, eine Verbindung mit einem Kolben (14, 50), insbesondere einem Kolben (14, 50) nach einem der Ansprüche 7 bis 9, bereitzustellen, wobei die Verbindung derart ist, dass eine Begrenzung einer Relativbewegung zwischen dem Kolben (14, 50) und der Zangenbuchse gegeben ist, um eine Hubbewegung des Kolbens (14, 50) zu begrenzen.

11. Zangenbuchse nach Anspruch 10, bei der die dritte Einrichtung ein zweites Element eines Bajonettverschlusses umfasst.

12. Futterkörper für ein Spannfutter nach einem der Ansprüche 1 bis 6, mit einer ersten Einrichtung zur Aufnahme einer Zangenbuchse, insbesondere einer Zangenbuchse nach Anspruch 10 oder 11.
